# EUROPEAN PATENT SPECIFICATION

(11) **EP 2 650 411 B1**
(45) Date of publication and mention of the grant of the patent: **10.06.2015**
(21) Application number: 11847389.1
(22) Date of filing: 27.04.2011
(51) Int. Cl.: D01D 5/00, D01D 4/00, D01D 13/00, B82Y 40/00, D01D 13/02

(54) **FIELD EMISSION DEVICE AND NANOFIBER MANUFACTURING DEVICE**
FELDEMISSIONSVORRICHTUNG UND NANOFASERHERSTELLUNGSVORRICHTUNG
DISPOSITIF À ÉMISSION DE CHAMP ET DISPOSITIF POUR LA FABRICATION DE NANOFIBRES

(30) Priority: 06.12.2010 JP 2010272070; 24.02.2011 KR 20110016675
(43) Date of publication of application: 16.10.2013
(73) Proprietor: Toptec Co., Ltd., Gumi-shi, Gyeonbuk 730-853 (KR); Shinshu University, Matsumoto-shi, Nagano 390-8621 (JP)
(72) Inventor: LEE, Jae Hwan, Gumi-si Gyeongsangbuk-do 730-853 (KR); KIM, Ick Soo, Ueda-shi Nagano 386-8567 (JP)
(74) Representative: Stolmár & Partner Patentanwälte PartG mbB
(86) International application number: PCT/KR2011/003054
(87) International publication number: WO 2012/077864

(56) References cited:
- EP-A2- 1 990 448
- JP-A- 2008 303 499
- KR-A- 20030 093 892
- KR-A- 20050 077 313
- KR-A- 20050 094 918
- KR-B1- 100 638 429
- US-A1- 2009 189 319
- US-A1- 2009 294 733

## Description

### Technical Field

The present invention relates to a field emission device and a nanofiber manufacturing device.

### Background Art

A field emission device which conducts field emission in such a way as to apply high voltage to a collector while a nozzle is grounded was proposed in Japanese Patent laid-open Publication No. 2008-506864 (hereinafter, referred to as "Patent document 1").

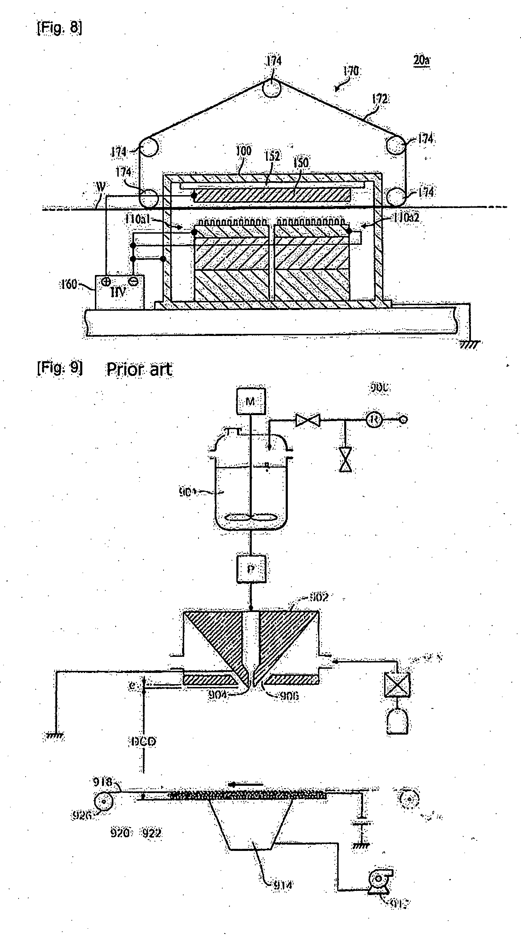

Fig. 9 is a view illustrating a field emission device 900 disclosed in Patent document 1. As shown in Fig. 9, the field emission device 900 proposed in Patent document 1 includes: a material tank 901 which stores a polymer solution therein; a nozzle block 902 which includes a solution discharge nozzle 904 that discharges a polymer solution, and a gas nozzle which forms the flow of gas; a collector 920 which is made of a conductive element; and a feed roll 924 and a winding roll 926 which are used to transfer a collection sheet 918. In Fig. 9, reference numeral 912 denotes a suction blower, 914 denotes a gas collection pipe, and 922 denotes a support.

In the field emission device 900 disclosed in Patent document 1, negative high voltage is applied to the collector 920 and, simultaneously, the solution discharge nozzle 904 discharges a polymer solution while the nozzle block 902 is grounded, thus forming nanofibers on the collection sheet, which is being transferred, through field emission.

According to the field emission device 900 disclosed in Patent document 1, all of the nozzle block 902, the ┌polymer solution before being discharged from the solution discharge nozzle 904┘, ┌the material tank 901 for storing the polymer solution┘ and ┌a polymer solution transfer unit (for example, a pipe and a pump) for transferring the polymer solution from the material tank 901 to the nozzle block 902J become ground potentials. Therefore, it is unnecessary for the material tank 901 or the polymer solution transfer unit to have high resistance against voltage. As a result, a problem of the structure of the field emission device being complicated, which may occur if the material tank 901 or the polymer solution transfer unit is required to have a high voltage-resistance structure, can be fundamentally prevented.

Furthermore, in the field emission device 900 disclosed in Patent document 1, high voltage is applied to the collector 920 capable of having a comparatively simple shape and structure, and the nozzle block 902, which has a comparatively complex shape and structure, is grounded. Under these conditions, field emission is conducted. Therefore, undesirable voltage discharge or drop can be prevented from occurring, whereby the field emission can be conducted continuously under stable conditions.

### Disclosure

### Technical Problem

However, according to a study conducted by the inventor of the present invention, even in a field emission device, such as that disclosed in Patent document 1, in which high voltage is applied to the collector and field emission is performed while the nozzle block is grounded, insulation between the collector and the casing or the other elements is substantially likely to be insufficient. If, in field emission, very high voltage (e.g., 35 kV) is applied between the nozzle block and the collector so as to manufacture nanofibers having high performance, insulation breakdown between the collector and the casing or the other elements may be induced, or leak current may be increased to an undesirable level, even if insulation breakdown is not induced. In this case, interruption of the operation of the field emission device is required. As a result, it is difficult to continuously operate the field emission device for a long time, and it is also difficult to mass-produce nanofibers having satisfactory performance.

Accordingly, the present invention has been made keeping in mind the above problems occurring in the prior art, and an object of the present invention is to provide a field emission device and a nanofiber manufacturing device which make it possible to reliably mass-produce nanofibers having satisfactory performance.

### Technical Solution

In order to accomplish the above object, in an aspect, the present invention provides a field emission device, including: a conductive casing; a collector attached to the casing by an insulator; a nozzle block disposed facing the collector, the nozzle block being provided with a plurality of nozzles discharging a polymer solution; and a power supply applying a high voltage between the nozzle block and the collector, wherein one of a positive electrode and a negative electrode of the power supply is connected to the collector while a remaining one of the positive electrode and the negative electrode of the power supply is connected to the nozzle block and the casing, wherein when the collector is viewed from the nozzle block, a periphery of the insulator is closer to an outside of the field emission device than a periphery of the collector, and when a thickness of the insulator is ┌a┘ and a distance between the periphery of the insulator and the periphery of the collector is ┌b┘, both ┌a ≥ 6mm┘ and ┌a + b ≥ 50mm┘ are satisfied.

In the field emission device of the present invention, preferably, ┌a ≥ 8 mm┘ may be satisfied.

Furthermore, in the field emission device of the present invention, ┌a + b ≥ 80 mm┘ may be satisfied.

In the field emission device of the present invention, the insulator may be made of polyamide, polyacetal, polycarbonate, modified polyphenylene ether, polybutyleneterephtalate, polyethylene terephthalate, amorphous polyallylate, polysulfone, polyethersulfone, polyphenylene sulfide, polyether ether keton, polyimid, poly ethyl imide, fluorine resin, liquid crystal polymer, polypropylene, high-density polyethylene or polyethylene.

Preferably, the field emission device may be installed in a room set at an ambient temperature ranging from 20°C to 40°C and an ambient humidity ranging from 20% to 60%.

In the field emission device of the present invention, when the distance between the collector and upper ends of the nozzles is ┌c┘, ┌c ≥ 60 mmj may be satisfied.

Furthermore, in the field emission device of the present invention, the nozzles of the nozzle block may comprise a plurality of upward nozzles discharging the polymer solution from outlets thereof upwards. The field emission device may be configured such that the polymer solution is discharged from the outlets of the upward nozzles in such a way as to overflow from the outlets of the upward nozzles, thus forming nanofibers through field-emission and, simultaneously, polymer solution that has overflowed from the outlets of the upward nozzles is collected and reused as material for nanofibers.

In another aspect, the present invention provides a nanofiber manufacturing device, including a feed unit, a winding unit, a transfer device transferring a long sheet, and the field emission device depositing nanofibers on the long sheet that is being transferred by the transfer device.

In the nanofiber manufacturing device according to the present invention, the field emission device may comprise a plurality of field emission devices arranged in series in a direction in which the long sheet is transferred.

### Advantageous Effects

In a field emission device according to the present invention, because a casing or a nozzle block is grounded, all of the nozzle block, a ┌polymer solution before being discharged from nozzles┘, ┌a material tank for storing the polymer solution┘ and ┌a polymer solution transfer unit (for example, a pipe and a pump) for transferring the polymer solution from the material tank to the nozzle block┘ become ground potentials. In the same manner as the case of the field emission device disclosed in Patent document 1, it is unnecessary for the material tank or the polymer solution transfer unit to have high resistance against voltage. Therefore, the present invention can prevent a problem of the structure of the field emission device being complicated, which may occur if the material tank or the polymer solution transfer unit is configured to have high resistance against voltage.

Also, in the field emission device according to the present invention, when the collector is viewed from the nozzle block, the periphery of an insulator is closer to an outside of the device than the periphery of the collector. When the thickness of the insulator is ┌a┘ and the distance between the periphery of the insulator and the periphery of the collector is ┌b┘, not only ┌a ≥ 6 mm┘ but also ┌a + b ≥ 50 mm┘ are satisfied. Consequently, sufficient insulation between the collector and the casing or the other elements can be ensured. As can be clearly understood from experimental examples which will be described later herein, even when 35 kV is applied between the nozzle block and the collector to conduct field emission, breakdown of insulation between the collector and the casing or the other elements can be prevented. Moreover, leak current can be controlled to be within a predetermined range. Consequently, it is possible that the frequency of interruption of the field emission device is reduced to a very low level. Therefore, the field emission device can be continuously operated for a long time, thus reliably making mass-production of nanofibers having satisfactory performance possible.

Further, because the field emission device according to the present invention is configured such that leak current can be controlled within a predetermined range, it is possible to detect an abnormality of the field emission device early by always monitoring the current that is supplied from the power supply.

Furthermore, the field emission device according to the present invention is configured such that ┌a ≥ 8 mm┘ is satisfied. Therefore, even if a voltage of 40 kV is applied between the collector and the nozzle block to conduct the field emission, a problem of insulation breakdown between the collector and the casing or the other elements is prevented, and leak current can be controlled to be within a predetermined range.

Moreover, the field emission device according to the present invention is configured such that ┌a + b ≥ 80 mm┘ is satisfied. Thereby, even if a voltage of 40 kV is applied between the collector and the nozzle block to conduct the field emission, breakdown of insulation between the collector and the casing or the other elements is not induced, and leak current can be reliably controlled to be within a predetermined range.

Furthermore, in the field emission device according to the present invention, the insulator is made of polyamide, polyacetal, polycarbonate, modified polyphenylene ether, polybutyleneterephtalate, polyethylene terephthalate, amorphous polyallylate, polysulfone, polyethersulfone, polyphenylene sulfide, polyether ether keton, polyimid, poly ethyl imide, fluorine resin, liquid crystal polymer, polypropylene, high-density polyethylene or polyethylene. These materials have satisfactory insulation performance and high mechanical strength and high machinability and thus can be appropriately used as the insulator of the field emission device.

The field emission device according to the present invention is installed in the room set at an ambient temperature ranging from 20°C to 40°C and an ambient humidity ranging from 20% to 60%. Therefore, it is possible that leak current is stably maintained at a low level.

Furthermore, the field emission device according to the present invention is configured such that, when the distance between the collector and the upper ends of the nozzles is ┌c┘, ┌c ≥ 60 mm┘ is satisfied, thus making it possible to manufacture superfine nanofibers.

Moreover, the field emission device according to the present invention can manufacture nanofibers through field emission in such a way as to discharge polymer solution from the outlets of the upward nozzles. Therefore, unlike the conventional field emission device disclosed in Patent document 1 in which the downward nozzle is used, a droplet phenomenon can be prevented, whereby the quality of manufactured nanofibers can be markedly enhanced.

In addition, the field emission device can manufacture nanofibers through field emission in such a way as to overflow polymer solution from the outlets of the upward nozzles. Therefore, a sufficient amount of polymer solution can be supplied to the upward nozzles so that the quality of manufactured nanofibers can be uniformly maintained.

Moreover, polymer solution which has overflowed from the outlets of the upward nozzles can be collected and reused as material for nanofibers. Thereby, the amount of raw material used can be reduced, thus making it possible to reduce the production cost of nanofiber. This satisfies the recent trend towards resource saving.

Although the nozzle block provided with the upward nozzles requires a mechanical unit for collecting the polymer solution, this mechanical unit does not make the entire device complex, because the mechanical unit does not need to have a high voltage resistance structure.

Meanwhile, the nanofiber manufacturing device according to the present invention uses the field emission device, thus reliably making mass-production of nanofibers having satisfactory performance possible.

Furthermore, the nanofiber manufacturing device according to the present invention includes a plurality of field emission devices. Therefore, because the field emission devices are used to manufacture nanofibers, the nanofiber manufacturing device can mass-produce nanofibers with high productivity.

Here, in the case of the nanofiber manufacturing device provided with the several field emission devices, if a problem occurs in any one of the several field emission devices (for example, in any one of the several field emission devices, breakdown of insulation between the collector and the casing or the other elements is induced or a leak current is increased to an undesirable level without insulation breakdown being induced), the operation of the corresponding field emission device is required to be interrupted. Given this, it may be considered that it is difficult to continuously operate the nanofiber manufacturing device for a long time. However, in the nanofiber manufacturing device of the present invention, because it is provided with the field emission devices which can be continuously operated for a long time compared to that of the conventional technique, the nanofiber manufacturing device can also be continuously operated for a long time. Moreover, the present invention makes it possible to reliably mass-produce nanofibers having satisfactory performance.

The field emission device or the nanofiber manufacturing device according to the present invention can manufacture different kinds of nanofilbers for various purposes of use, for example, medical supplies such as highly functional and highly sensitive textiles, health and beauty related products such as health or skin care products, industrial material such as cloths, filters, etc., electronic-mechanical material such as separators for secondary batteries, separators for condensers, carriers for different kinds of catalysts, material for a variety of sensors, and medical material such as regenerative medical material, bio-medical material, medical MEMS material, biosensor material, etc.

### Description of Drawings

Fig. 1 is a view illustrating a nanofiber manufacturing device according to an embodiment of the present invention.
Fig. 2 is a view illustrating a field emission device according to an embodiment of the present invention.
Fig. 3 is an enlarged view of a critical portion of the field emission device according to the embodiment of the present invention.
Fig. 4 is a view illustrating the operation of a main controller according to an embodiment of the present invention.
Fig. 5 is a block diagram showing the operation of the main controller according to the embodiment of the present invention.
Fig. 6 is a view showing the result of Experimental example 1.
Fig. 7 is a view showing the result of Experimental example 2.
Fig. 8 is a view illustrating a filed emission device.
Fig. 9 is a view illustrating a conventional field emission device.

### Best Mode

Hereinafter, a field emission device and a nanofiber manufacturing device according to an embodiment of the present invention will be described with reference to the attached drawings.

### 1. A field emission device and a nanofiber manufacturing device according to an embodiment

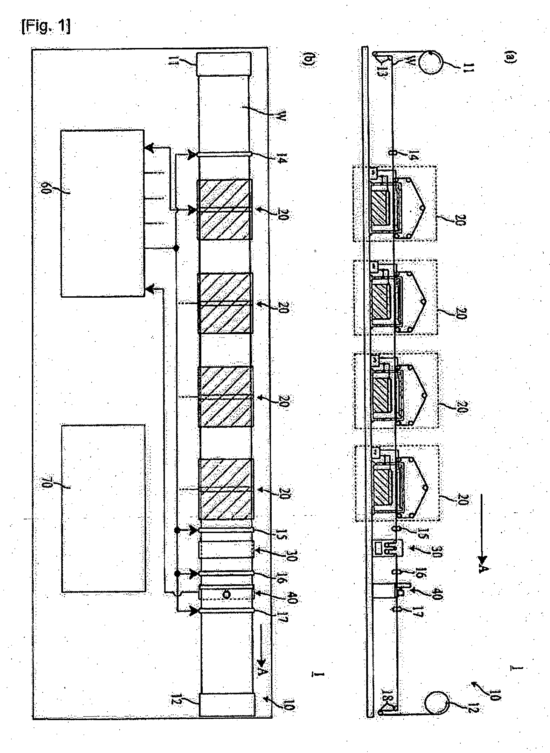

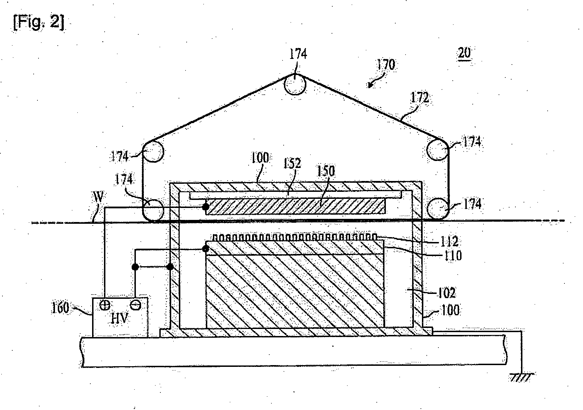

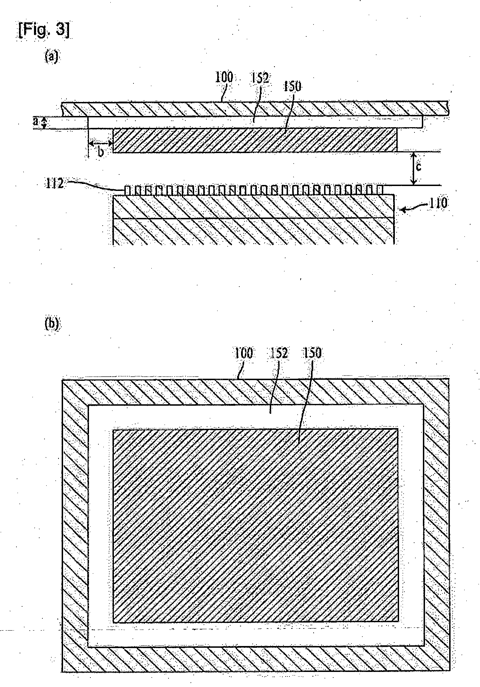

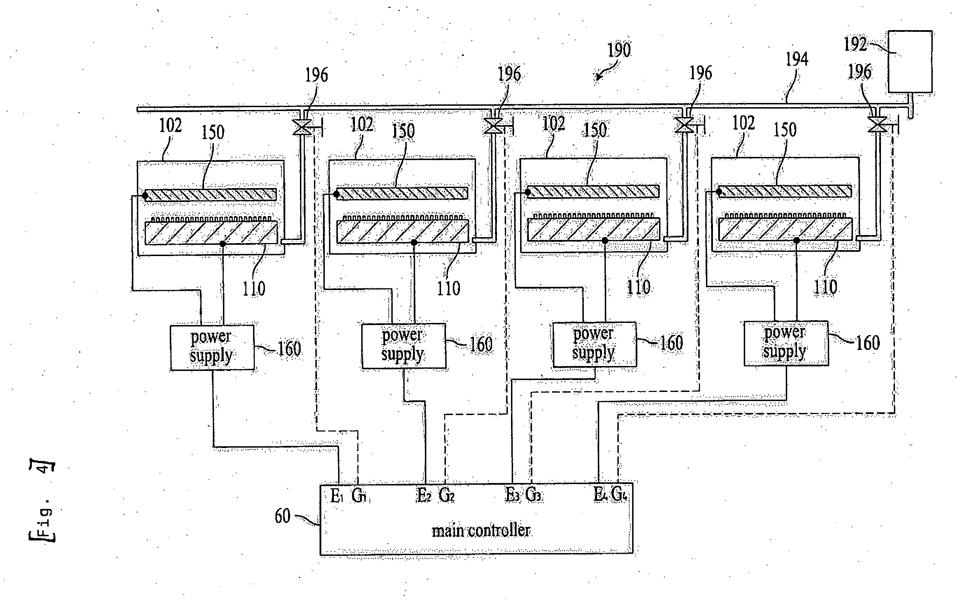

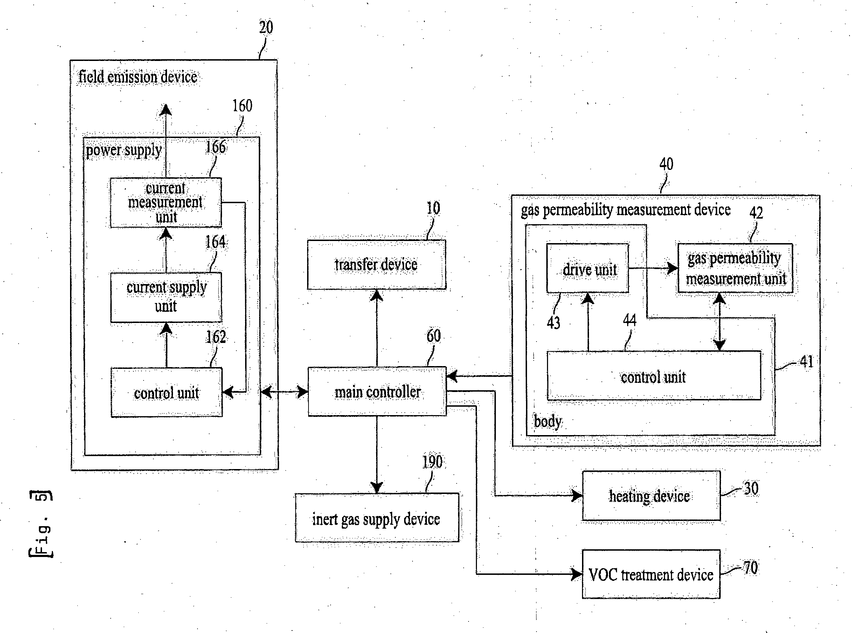

Fig. 1 is a view illustrating a nanofiber manufacturing device according to an embodiment of the present invention. Fig. 1a is a front view of the nanofiber manufacturing device, and Fig. 1b is a plan view of the nanofiber manufacturing device. Fig. 2 is a view illustrating a field emission device according to an embodiment of the present invention. Fig. 3 is an enlarged view of a critical portion of the field emission device according to the embodiment of the present invention. Fig. 3a is an enlarged sectional view of the critical portion of the field emission device, and Fig. 3b is an enlarged plan view of the field emission device. Figs. 4 and 5 are views illustrating the operation of a main controller according to the embodiment of the present invention. In Figs. 1 and 2, a polymer solution supply unit and a polymer solution collection unit are not designated. Furthermore, Fig. 1a illustrates some parts using sectional views.

As shown in Fig. 1, the nanofiber manufacturing device 1 according to the embodiment of the present invention includes a transfer device 10 which transfers a long sheet W at a predetermined transfer speed V, a plurality of field emission devices 20 which are arranged in series with respect to a transfer direction A in which the long sheet W is transferred by the transfer device 10, a gas permeability measurement device 40, and a main controller 60 which controls the transfer device 10, the field emission device 20, a heating device 30 which will be explained later herein, the gas permeability measurement device 40, a VOC treatment device 70 which will be explained later herein, an inert gas supply device 190 which will be explained later herein, a polymer supply device and a polymer collection device.

In the nanofiber manufacturing device 1 according to this embodiment, four field emission devices 20 are arranged in series in the transfer direction A in which the long sheet W is transferred.

The heating device 30 is disposed between the field emission device 20 and the gas permeability measurement device 40 and heats the long sheet W on which nanofibers are deposited. The VOC treatment device 70 burns volatile components generated when nanofibers are deposited on the long sheet W and eliminates them. The nanofiber manufacturing device 1 according to this embodiment further includes an inert gas supply device (190, refer to Fig. 4) which receives a signal from the main controller 60 and supplies inert gas into a filed emission chamber 102 of a field emission device 20 that is detected to be abnormal.

As shown in Fig. 1, the transfer device 10 includes a feed roller 11 which supplies the long sheet W, a winding roller 12 around which the long sheet W is wound, and auxiliary rollers 13 and 18 and drive rollers 14, 15, 16 and 17 which are disposed between the feed roller 11 and the winding roller 12. The feed roller 11, the winding roller 12 and the drive roller 14, 15, 16 and 17 are configured to be rotated by a drive motor which is not shown in the drawings.

As shown in Fig. 2, the field emission device 20 includes a casing 100 which is conductive, a collector 150 which is attached to the casing 100 with an insulator 152 interposed therebetween, a nozzle block 110 which is disposed facing the collector 150 and is provided with a plurality of nozzles 112 to discharge polymer solution, a power supply 160 which applies high voltage (e.g., 10 kV to 50 kV) between the collector 150 and the nozzle block 110, a field emission chamber 102 which is a space that covers the collector 150 and the nozzle block 110, and an auxiliary belt unit 170 which assists transferring the long sheet W.

As shown in Figs. 2 and 3, the nozzle block 110 includes, as the nozzles 112, a plurality of upward nozzles 112 which discharges a polymer solution from outlets thereof upwards. The nanofiber manufacturing device 1 is configured such that the polymer solution is discharged from the outlets of the upward nozzles 112 in such a way as to overflow from the outlets of the upward nozzles 112, thus forming nanofibers through field-emission and, simultaneously, the polymer solution that has overflowed from the outlets of the upward nozzles 112 is collected so that it can be reused as material for nanofibers. The upward nozzles 112 are arranged at intervals, for example, of 1.5 cm to 6.0 cm. The number of upward nozzles 112 is, for example, 36 (6 by 6, when the same in length and width) - 21904 (148 by 148). The nozzle block 110 may be directly grounded or, alternatively, it may be grounded through the casing 100. In the field emission device according to the present invention, various sizes and shapes of nozzle blocks can be used, and the nozzle block 110 preferably has a rectangular shape (including a square shape), one side of which ranges from 0.5 m to 3 m, when viewed from the plan view.

As stated above, the collector 150 is attached to the conductive casing 100 by the insulator 152. A positive electrode of the power supply 160 is connected to the connector 150, and a negative electrode of the power supply 160 is connected to the nozzle block 110 and the casing 100. As shown in Fig. 3, when the collector 150 is viewed from the nozzle block 110, a periphery of the insulator 152 is closer to the outside of the device than a periphery of the collector 150. When the thickness of the insulator 152 is ┌a┘ and a distance between the periphery of the insulator 152 and the periphery of the collector 150 is ┌b┘, both ┌a ≥ 6mm┘ and ┌a + b ≥ 50mm┘ are satisfied.

For instance, the insulator 152 is made of polyamide, polyacetal, polycarbonate, modified polyphenylene ether, polybutyleneterephtalate, polyethylene terephthalate, amorphous polyallylate, polysulfone, polyethersulfone, polyphenylene sulfide, polyether ether keton, polyimid, poly ethyl imide, fluorine resin, liquid crystal polymer, polypropylene, high-density polyethylene or polyethylene.

When the distance between the collector 150 and upper ends of the nozzles 112 is ┌c┘, ┌c ≥ 60 mm┘ is satisfied.

As shown in Figs. 4 and 5, the power supply 160 includes a current supply unit 164, a current measurement unit 166 which measures current supplied from the current supply unit 164, and a control unit 162 which controls the operation of the current supply unit 164 and processes the result of a current measurement of the current measurement unit 166. Furthermore, the power supply 160 applies a high voltage between the collector 150 and the nozzles 112, measures current supplied from the power supply 160, and transmits a measured value to the main controller 60. When the power supply 160 receives a current interruption signal from the main controller 60, power supply is interrupted.

As shown in Fig. 2, the auxiliary belt unit 170 includes an auxiliary belt 172 which is rotated in synchronous with a speed at which the long sheet W is transferred, and five auxiliary belt rollers 174 which assists the rotation of the auxiliary belt 172. One of the five auxiliary belt rollers 174 or more than one of the five auxiliary belt rollers 174 are drive rollers, and the rest is a driven roller. Because the auxiliary belt 172 is disposed between the collector 150 and the long sheet W, the long sheet W can be smoothly transferred without being attracted to the collector 150 to which positive high voltage is applied.

The field emission device 20 is installed in a room set at an ambient temperature ranging from 20°C to 40°C and an ambient humidity ranging from 20% to 60%.

The heating device 30 is disposed between the field emission device 20 and the gas permeability measurement device 40 and functions to heat the long sheet W on which nanofibers are deposited. Although the temperature to which the long sheet W is to be heated can be changed depending on the kind of long sheet W or nanofiber, it is preferable that the long sheet W is heated to a temperature ranging from 50°C to 300°C.

As shown in Fig. 5, the gas permeability measurement device 40 includes a gas permeability measurement unit 42 which measures gas permeability P of the long sheet W on which nanofibers are deposited, a drive unit 43 which reciprocates the gas permeability measurement unit 42 in a transverse direction of the long sheet W at a predetermined cycle T, and a control unit 44 which controls the operation of the drive unit 43 and the gas permeability measurement unit 42 and, simultaneously, receives the result of measurement from the permeability measurement unit 42 and processes the result. The drive unit 43 and the control unit 44 are installed in a main body 41. A typical known gas permeability measurement device can be used as the gas permeability measurement device 40.

As shown in Fig. 4, the inert gas supply device 190 includes an inert gas cylinder 192 which supplies inert gas, an inert gas supply line 194 which supplies inert gas to the field emission chambers 102, and on-off valves 196 which control supply of inert gas to the respective field emission chambers 102 based on a signal transmitted from the main controller 60.

The main controller 60 controls the transfer device 10, the field emission device 20, the heating device 30, the gas permeability measurement device 40, the VOC treatment device 70, an inert gas control device 192, the polymer supply device and the polymer collection device.

The VOC treatment device 70 functions to burn volatile components generated when nanofibers are deposited on the long sheet W, thus eliminating them.

### 2. A method of manufacturing_nanofibers using the nanofiber manufacturing device according to an embodiment

Hereinafter, a method of manufacturing nanofiber nonwoven fabric using the nanofiber manufacturing device 1 having the above-mentioned construction will be described.

First, the long sheet W is set on the transfer device 10. Thereafter, while the long sheet W is transferred from the feed roller 11 to the winding roller 12 at a predetermined transfer speed V, the field emission devices 20 successively deposits nanofibers on the long sheet W. Subsequently, the heating device 30 heats the long sheet W on which nanofibers have been deposited. In this way, nanofiber nonwoven fabric including the long sheet on which nanofibers are deposited is manufactured.

During the manufacturing process, when each field emission device carries out field emission while voltage, e.g., of 35kV, is applied between the collector 150 and the nozzle block 110, if it is detected that current supplied from one of the power supplies 160 or more than one power supply 160 is larger than 0.24 mA, the main controller 60 transmits a current interruption signal to the corresponding one or more power supplies 160.

Furthermore, when the current interruption signal is transmitted to the one or more power supplies 160, the main controller 60 also transmits a transfer speed reduction signal to the transfer device 10 so as to maintain the amount of cumulative nanofibers deposited on the long sheet W per a unit area within a predetermined range.

Here, when the number of power supplies 160 that have supplied current for a first period before the transfer speed is reduced is ┌n┘ and the number of power supplies 160 that supply power for a second period after the transfer speed has been reduced is ┌m┘, the main controller 60 controls the transfer device such that the transfer speed for the second period is ┌m/n┘ times the transfer speed for the first period. Subsequently, the main controller 60 more finely controls the transfer speed based on the gas permeability measured by the gas permeability measurement device 40.

The control of the transfer speed V can be embodied by controlling the rpm of the drive rollers 14, 15, 16 and 17.

Furthermore, when it is detected that current of more than 0.24 mA is supplied from one or more power supplies 160, the main controller 60 transmits a signal to the inert gas supply device 190 to supply inert gas into the field emission chambers 102 of the field emission devices 20 associated with the one or more power supplies 160.

Meanwhile, when it is detected that current of less than 0.18 mA is supplied from one ore more power supplies 160, the main controller 60 generates an alarm (a warning sound or warning sign) to notify that the one or more power supplies 160 are abnormal.

Hereinafter, field emission conditions in the nanofiber manufacturing method according to the present invention will be described by example.

Nonwoven fabric, cloth, knitted fabric, etc., which are made of different kinds of materials, can be used as the long sheet. Preferably, the thickness of the long sheet ranges from 5 µm to 500 µm, and the length thereof ranges from 10 m to 10 km.

Polylactic acid (PLA), polypropylene (PP), polyvinyl acetate (PVAc), polyethylene terephthalate (PET), polybutylene terephthalate (PBT), polyethylene naphthalate (PEN), polyamide PA, polyurethane (PUR), polyvinyl alcohol (PVA), polyacrylonitrile (PAN), polyether imide (PEI), polycaprolactone (PCL), polylactic acid glycolic acid (PLGA), silk, cellulose, chitosan, etc. can be used as material of the polymer for nanofibers.

Dichloromethane, dimethylformaide, dimethyl sulfoxide, methyl ethyl ketone, chloroform, acetone, water, formic acid, acetic acid, cyclohexane, THF, etc. can be used as a solvent which is used for the polymer solution. A mixture of different kinds of solvents may be used, and an addition agent such as a conductivity improver may be added to the polymer solution.

Preferably, the gas permeability P of nanofiber nonwoven fabric ranges from 0.15 cm³/cm²/s to 200 cm³/cm²/s. The transfer speed V is preferably set to a speed of 0.2 m/minute to 100 m/minute. The voltage which is applied to the nozzles, the collector 150 and the nozzle block 110 can be set to a voltage of 10 kV to 80 kV.

The temperature in the emission area is preferably set to 25°C, and the humidity in the emission area is set to 30%.

### 3. The effects of the field emission device and the manufacturing device according to the embodiment

In the field emission device 20 according to the embodiment, the casing 100 or the nozzle block 110 is grounded. All of the nozzle block 110, ┌polymer solution before being discharged from the nozzles 112┘, ┌a material tank for storing the polymer solution┘ and ┌a polymer solution transfer unit (for example, a pipe and a pump) for transferring the polymer solution from the material tank to the nozzle block 110┘ become ground potentials. Therefore, in the same manner as the case of the field emission device disclosed in Patent document 1, it is unnecessary for the material tank or the polymer solution transfer unit to have high resistance against voltage. Thus, the present invention can prevent a problem of the structure of the field emission device being complicated, which may occur if the material tank or the polymer solution transfer unit is configured to have high resistance against voltage.

Furthermore, in the field emission device 20 according to the embodiment, when the collector 150 is viewed from the nozzle block 110, the periphery of the insulator 152 is closer to the outside of the device than the periphery of the collector 150. When the thickness of the insulator 152 is ┌a┘ and the distance between the periphery of the insulator 152 and the periphery of the collector 150 is ┌b┘, not only ┌a ≥ 6 mm┘ but also ┌a + b ≥ 50 mm┘ are satisfied. Consequently, sufficient insulation between the collector 150 and the casing 100 or the other elements can be ensured. As can be clearly understood from experimental examples which will be described later herein, even when 35 kV is applied between the nozzle block 110 and the collector 150 to conduct field emission, breakdown of insulation between the collector 150 and the casing 110 or the other elements can be prevented. Moreover, leak current can be controlled to be within a predetermined range. Consequently, it is possible that the frequency of interruption of the field emission device 20 is reduced to a very low level. Therefore, the field emission device can be continuously operated for a long time, thus reliably making mass-production of nanofibers having satisfactory performance possible.

Further, because the field emission device 20 according to the embodiment is configured such that leak current can be controlled within a predetermined range, it is possible to detect an abnormality of the field emission device early by always monitoring current supplied from the power supply 160.

In addition, the field emission device 20 according to the embodiment is installed in the room set at an ambient temperature ranging from 20°C to 40°C and an ambient humidity ranging from 20% to 60%. Therefore, it is possible that leak current is stably maintained at a low level.

Furthermore, the field emission device 20 according to the embodiment is configured such that, when the distance between the collector 150 and the upper ends of the nozzles 112 is ┌c┘, ┌c ≥ 60 mm┘ is satisfied, thus making it possible to manufacture superfine nanofibers.

Moreover, the field emission device 20 according to the embodiment can manufacture nanofibers through field emission in such a way as to discharge a polymer solution from the outlets of the upward nozzles 112. Therefore, unlike the conventional field emission device disclosed in Patent document 1 in which the downward nozzle is used, a droplet phenomenon can be prevented, and the quality of manufactured nanofibers can be markedly enhanced.

In addition, the field emission device 20 according to the embodiment can manufacture nanofibers through field emission in such a way as to overflow the polymer solution from the outlets of the upward nozzles 112. Therefore, a sufficient amount of the polymer solution can be supplied to the upward nozzles so that the quality of manufactured nanofibers can be uniformly maintained.

Moreover, the field emission device 20 according to the embodiment is configured such that the polymer solution which has overflowed from the outlets of the upward nozzles 112 can be collected and reused as material for nanofibers. Thereby, the amount of raw material used can be reduced, thus making it possible to reduce the production cost of nanofiber.

This satisfies the recent trend towards resource saving.

Although the nozzle block 112 provided with the upward nozzles requires a mechanical unit for collecting the polymer solution, this mechanical unit does not make the entire device complex, because the mechanical unit does not need to have a high voltage resistance structure.

The nanofiber manufacturing device 1 according to the embodiment of the present invention uses the field emission device 20 having the above-mentioned construction, thus reliably making mass-production of nanofibers having satisfactory performance possible.

Furthermore, the nanofiber manufacturing device 1 according to the embodiment includes several field emission devices 20 which are arranged in series in a transfer direction in which the long sheet is transferred. Therefore, because the several field emission devices are used to manufacture nanofibers, the nanofiber manufacturing device can mass-produce nanofibers with high productivity.

In addition, the nanofiber manufacturing device 1 according to the embodiment of the present invention uses the field emission devices which can be continuously operated for a long time, compared to the conventional technique. Thus, the nanofiber manufacturing device can also be continuously operated for a long time. Moreover, the nanofiber manufacturing device can mass-produce nanofibers having satisfactory performance.

Further, the nanofiber manufacturing device 1 according to the embodiment includes the main controller 60. When the emission devices 20 are continuously operated for a long time, even if an abnormality occurs in only one of the field emission devices 20 (for example, when it is detected that a larger amount of current than a predetermined first preset current is supplied from one or more power supplies), the abnormality can be instantaneously detected, whereby the reliability of the nanofiber manufacturing device can be markedly enhanced.

Also, because the nanofiber manufacturing device 1 according to the embodiment includes the main controller 60 having the above-mentioned construction, even if an abnormality occurs in only one of the field emission devices while the field emission devices are being continuously operated for a long time, the only the operation of the corresponding field emission device that has the abnormality need be interrupted, while the remaining field emission devices do not need to be interrupted. Therefore, the process of manufacturing nanofibers can be continuously conducted without being interrupted.

As a result, in the nanofiber manufacturing device according to the embodiment of the present invention, a range of criteria in determining whether a state of a field emission device is abnormal or not can be reduced. Thereby, the nanofiber manufacturing device can mass-produce nanofibers with high productivity without reducing the reliability of products.

Furthermore, in the nanofiber manufacturing device 1 provided with the main controller 60, even if the operation of a field emission device in which an abnormality occurs is interrupted, the main controller 60 controls the device such that the transfer speed is reduced, thus making it possible to fall the amount of cumulative nanofibers deposited on the long sheet per a unit area within a predetermined range. As a result, the gas permeability and the thickness of manufactured nanofiber nonwoven fabric can be maintained uniform during the mass-production process.

In addition, in the nanofiber manufacturing device 1 according to the present invention, the main controller 60 controls the transfer device such that the transfer speed V2 for the second period T2 is reduced to ┌m/n┘ times the transfer speed V1 for the first period T1, thus making it possible to maintain the amount of cumulative nanofibers deposited on the long sheet per a unit area within a predetermined range.

Moreover, in the nanofiber manufacturing device 1, the transfer speed can be controlled based on the gas permeability measured by the gas permeability measurement device 40. Therefore, even if there is a little difference between the amounts of nanofibers deposited per a unit area in the field emission devices, nanofiber nonwoven fabric with uniform gas permeability can be mass-produced.

### [Experimental example 1]

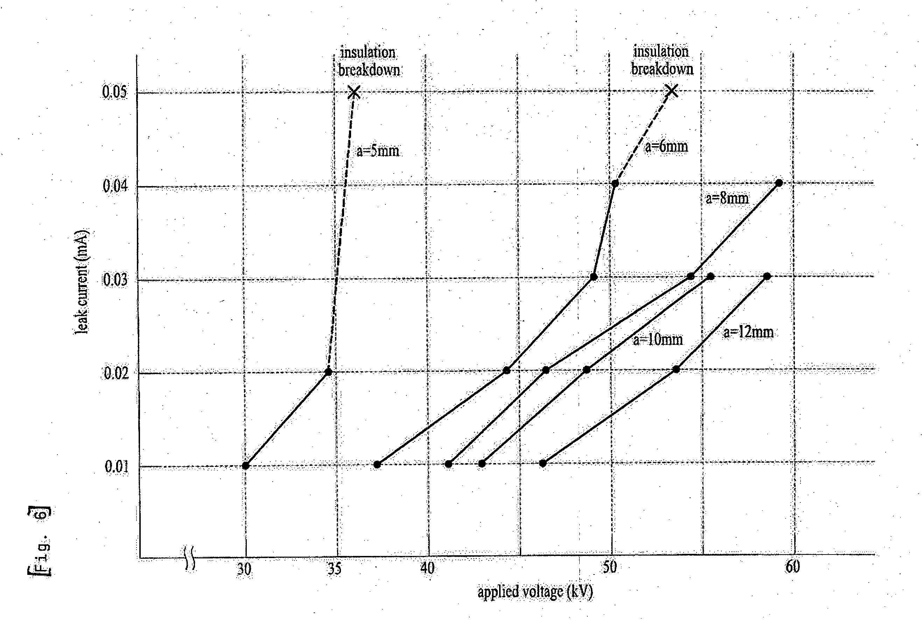

Experimental example 1 is directed to determining the thickness ┌a┘ of the insulator 152 that is required to control leak current within a predetermined range. Table 1 shows experiment results for Experimental example 1. Fig. 6 is a graph showing the experiment results for Experimental example 1.

**[Table 1]**

| a = 5 mm | | a = 6 mm | | a = 8 mm | | a = 10 mm | | a = 12 mm | |
|---|---|---|---|---|---|---|---|---|---|
| Cur. (mA) | Volt. (kV) | Cur. (mA) | Volt. (kV) | Cur. (mA)) | Volt. (kV) | Cur. (mA) | Volt. (kV) | Cur. (mA) | Volt. (kV) |
| 0.01 | 28.0 | 0.01 | 37.2 | 0.01 | 41.0 | 0.01 | 43.0 | 0.01 | 46.3 |
| 0.02 | 34.4 | 0.02 | 44.3 | 0.02 | 46.0 | 0.02 | 49.0 | 0.02 | 54.0 |
| 0.03 | - | 0.03 | 49.1 | 0.03 | 54.8 | 0.03 | 56.0 | 0.03 | 59.0 |
| 0.04 | - | 0.04 | 50.3 | 0.04 | 59.7 | 0.04 | - | 0.04 | - |
| Ins. break | 38.0 | Ins. break | 53.4 | Ins. break | - | Ins. break | - | Ins. break | - |
| * b is fixed to 30 mm | | | | | | | | | |

In Table 1, the term 'Ins. break' refers to insulation breakdown.

In Experimental example 1, the field emission device 20 according to the embodiment was used (the thickness ┌a┘ was 5 mm, 6 mm, 8 mm, 10 mm or 12 mm, and the distance ┌b┘ was fixed to 30 mm). In the state in which no polymer solution was supplied to the nozzle block 110, voltage was applied between the collector 150 and the nozzle block 110 such that current (in this case, leak current) supplied from the power supply 160 becomes a predetermined current, for example, 0.01 mA, 0.02 mA, 0.03 mA, 0.04 mA or 0.05 mA. Leak current and applied voltage in each case were recorded in a graph.

As can be understood from Table 1 and Fig. 6, when the thickness ┌a┘ of the insulator 152 is 6 mm or more, even if voltage of 35 kV is applied between the collector 150 and the nozzle block 110, it is possible that leak current is restricted to be about 0.01 mA. Furthermore, when the thickness ┌a┘ of the insulator 152 is 8 mm or more, even if voltage of 40 kV is applied between the collector 150 and the nozzle block 110, it is possible that leak current is restricted to be about 0.01 mA. In addition, when the thickness ┌a┘ of the insulator 152 is 12 mm or more, even if voltage of 45 kV is applied between the collector 150 and the nozzle block 110, it is possible that leak current is restricted to be about 0.01 mA.

### [Experimental example 2]

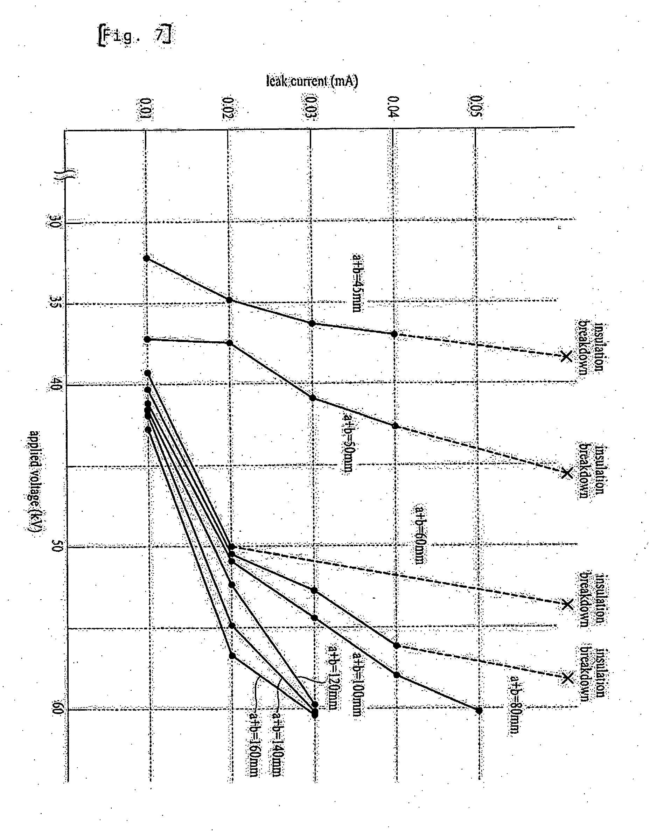

Experimental example 2 is directed to determining the distance ┌a + b┘, defined by the insulator 152 and the collector 150 on the surface of the insulator 152, that is required to maintain leak current within a predetermined range. Table 2 shows experiment results for Experimental example 2. Fig. 7 is a graph showing the experiment results for Experimental example 2.

**[Table 2]**

| a+b=45mm | | a+b=50mm | | a+b=60mm | | a+b=80mm | | a+b=100mm | | a+b=120mm | | a+b=140mm | | a+b=160mm | |
|---|---|---|---|---|---|---|---|---|---|---|---|---|---|---|---|
| Cur. (mA) | Volt. (kV) | Cur. (mA) | Volt. (kV) | Cur. (mA) | Volt. (kV) | Cur. (mA) | Volt. (kV) | Cur. (mA) | Volt. (kV) | Cur. (mA) | Volt. (kV) | Cur. (mA) | Volt. (kV) | Cur. (mA) | Volt. (kV) |
| 0.01 | 32.2 | 0.01 | 37.0 | 0.01 | 39.2 | 0.01 | 40.3 | 0.01 | 41.2 | 0.01 | 41.7 | 0.01 | 41.8 | 0.01 | 42.8 |
| 0.02 | 34.8 | 0.02 | 37.3 | 0.02 | 50.2 | 0.02 | 50.7 | 0.02 | 50.9 | 0.02 | 52.7 | 0.02 | 55.3 | 0.02 | 57.1 |
| 0.03 | 36.3 | 0.03 | 40.8 | 0.03 | - | 0.03 | 53.0 | 0.03 | 54.8 | 0.03 | 60.3 | 0.03 | 60.5 | 0.03 | 60.8 |
| 0.04 | 37.0 | 0.04 | 42.6 | 0.04 | - | 0.04 | 56.5 | 0.04 | 57.3 | 0.04 | - | 0.04 | - | 0.04 | - |
| 0.05 | - | 0.05 | - | 0.05 | - | 0.05 | - | 0.05 | 60.7 | 0.05 | - | 0.05 | - | 0.05 | - |
| Ins. break | - | Ins. break | 46.0 | Ins. break | 54.0 | Ins. break | 58.8 | Ins. break | - | Ins. break | - | Ins. break | - | Ins. break | - |
| * a is fixed to 40 mm | | | | | | | | | | | | | | | |

In Table 2, the term 'Ins. break' refers to insulation breakdown.

In Experimental example 2, the field emission device 20 according to the embodiment was used (the distance ┌a + b┘ was 45 mm, 50 mm, 60 mm, 80 mm, 100 mm, 120 mm, 140 mm or 160 mm, and the thickness ┌a┘ was fixed to 40 mm). In the state in which no polymer solution was supplied to the nozzle block 110, voltage was applied between the collector 150 and the nozzle block 110 such that current (in this case, leak current) supplied from the power supply 160 becomes a predetermined current, for example, 0.01 mA, 0.02 mA, 0.03 mA, 0.04 mA or 0.05 mA. Leak current and applied voltage in each case were recorded in a graph.

As can be understood from Table 2 and Fig. 7, when the distance [a + b] is 50 mm or more, even if voltage of 35 kV is applied between the collector 150 and the upward nozzles 112, it is possible that leak current is restricted to be about 0.01 mA. Furthermore, when the distance [a + b] is 80 mm or more, even if a voltage of 40 kV is applied between the collector 150 and the upward nozzles 112, it is possible that current leakage is restricted to be about 0.01 mA.

As shown in Experimental examples 1 and 2, when the thickness of the insulator 152 is [a] and the distance between the periphery of the insulator 152 and the periphery of the collector 150 is [b], if both [a ≥ 6 mm] and [a + b ≥ 50 mm] are satisfied, it is possible that current leakage which does not contribute to field emission is restricted to be a very low value. Due to this, [a difference between current in normal operation and a first preset current that is the upper limit threshold current where the filed emission device is determined to be abnormal] or [a difference between current in normal operation and a second preset current that is the lower limit threshold current where the field emission device is determined to be abnormal] can be very small. As a result, an abnormality can be detected early, and the reliability of the nanofiber manufacturing device can be markedly enhanced.

Although the preferred embodiments of the present invention have been disclosed for illustrative purposes, the present invention is not limited to the embodiments. Those skilled in the art will appreciate that various modifications are possible, without departing from the scope of the claims. For instance, the following modifications are also possible.
(1) in the above-mentioned embodiment, although the nanofiber manufacturing device of the present invention has been illustrated as including four field emission devices, the present invention is not limited to this construction. For example, the present invention may be applied to a nanofiber manufacturing device which includes one to three or five or more field emission devices.
(2) in the above-mentioned embodiment, each field emission device of the nanofiber manufacturing device of the present invention has been illustrated as being a bottom-up type field emission device provided with upward nozzles, the present invention is not limited to this. For instance, the present invention may be applied to a side type field emission device provided with side nozzles.
(3) in the above-mentioned embodiment, the field emission device of the nanofiber manufacturing device has been illustrated as being configured such that the positive electrode of the power supply 160 is connected to the collector 150 while the negative electrode of the power supply 160 is connected to the nozzle block 110 and the casing 100, the present invention is not limited to this. For example, the present invention may be applied to a nanofiber manufacturing device which includes a field emission device that is configured such that the negative electrode of the power supply is connected to the collector 150 while the positive electrode of the power supply is connected to the nozzle block 110 and the casing 100.
(4) in the above-mentioned embodiment, although the nanofiber manufacturing device of the present invention has been illustrated as being configured such that a single nozzle block is installed in each field emission device, the present invention is not limited to this construction. Fig. 8 is a view illustrating a field emission device 20a. As shown in Fig. 8, two nozzle blocks 110a1 and 110a2 may be installed in each field emission device 23a. In addition, the present invention may be applied to a nanofiber manufacturing device in which two or more nozzle blocks are provided in each field emission device.
   In this case, all of the nozzle blocks may have the same nozzle arrangement interval. Alternatively, the nozzle blocks may be configured such that the nozzle arrangement intervals thereof differ from each other. Furthermore, all of the nozzle blocks may have the same height or, alternatively, the heights of the nozzle blocks may differ from each other.
(5) the nanofiber manufacturing device of the present invention may further include a reciprocating unit which reciprocates the nozzle block at a predetermined period in the transverse direction of the long sheet. In the case where the field emission operation is performed while the nozzle block is reciprocated at a predetermined period by the reciprocating unit, the amount of cumulative nanofibers deposited on the long sheet can be uniform with respect to the transverse direction of the long sheet. In this case, preferably, each field emission device or each nozzle block is independently controlled with regard to the period or distance of the reciprocating motion of the nozzle block. Therefore, all of the nozzle blocks may be configured to be reciprocated on the same cycle. The nozzle blocks may be reciprocated on different cycles. Furthermore, all of the nozzle blocks may be configured such that the distances of the reciprocating motion of the nozzle blocks are the same as each other. Alternatively, the distances of the reciprocating motion of the nozzle blocks may be different from each other.

## Claims

1. A field emission device (20), comprising a conductive casing (100); a collector (150) attached to the casing by an insulator (152); a nozzle block (110) disposed facing the collector, the nozzle block being provided with a plurality of nozzles (112) discharging a polymer solution; and a power supply (160) applying a high voltage between the nozzle block and the collector, wherein one of a positive electrode and a negative electrode of the power supply is connected to the collector while a remaining one of the positive electrode and the negative electrode of the power supply is connected to the nozzle block and the casing,
wherein the casing or the nozzle block is grounded,
wherein when the collector is viewed from the nozzle block, a periphery of the insulator is closer to an outside of the field emission device than a periphery of the collector, and
when a thickness of the insulator is [a] and a distance between the periphery of the insulator and the periphery of the collector is [b] , both [a ≥ 6mmJ and [a + b ≥ 50mm] are satisfied.

2. The field emission device according to claim 1, wherein [a ≥ 8 mm] is satisfied.

3. The field emission device according to claim 1 or 2, wherein [a + b ≥ 80 mm] is satisfied.

4. The field emission device according to any one of claims 1 through 3, wherein the insulator is made of polyamide, polyacetal, polycarbonate, modified polyphenylene ether, polybutyleneterephtalate, polyethylene terephthalate, amorphous polyallylate, polysulfone, polyethersulfone, polyphenylene sulfide, polyether ether keton, polyimid, poly ethyl imide, fluorine resin, liquid crystal polymer, polypropylene, high-density polyethylene or polyethylene.

5. The field emission device according to any one of claims 1 through 4 being installed in a room set at an ambient temperature ranging from 20°C to 40°C and an ambient humidity ranging from 20% to 60%.

6. The field emission device according to any one of claims 1 through 5, wherein when the distance between the collector and upper ends of the nozzles is [c], [c ≥ 60 mm] is satisfied.

7. The field emission device according to any one of claims 1 through 6, wherein the nozzles of the nozzle block comprise a plurality of upward nozzles discharging the polymer solution from outlets thereof upwards, the field emission device being configured such that the polymer solution is discharged from the outlets of the upward nozzles in such a way as to overflow from the outlets of the upward nozzles, thus forming nanofibers through field-emission and, simultaneously, polymer solution that has overflowed from the outlets of the upward nozzles is collected and reused as material for nanofibers.

8. A nanofiber manufacturing device, comprising a feed unit, a winding unit, a transfer device transferring a long sheet, and a field emission device depositing nanofibers on the long sheet that is being transferred by the transfer device, wherein the field emission device comprises the field emission device according to any one of claims 1 through 7.

9. The nanofiber manufacturing device according to claim 8, wherein the field emission device comprises a plurality of field emission devices arranged in series in a direction in which the long sheet is transferred.

## Patentansprüche

1. Ein Feldemissionsgerät (20), umfassend ein leitfähiges Gehäuse (100); ein Kollektor (150) der durch einen Isolator (152) am Gehäuse befestigt ist; einen vor dem Kollektor angebrachten Düsenblock (110), der mit einer Vielzahl von Düsen (112) versehen ist, welche eine Polymerlösung abgeben; und ein Netzteil (160), welches eine hohe Spannung zwischen dem Düsenblock und dem Kollektor anlegt, wobei eine der positiven Elektroden und eine negative Elektrode des Netzteils mit dem Kollektor verbunden sind, während eine verbleibende positive Elektrode und die negative Elektrode des Netzteils mit dem Düsenblock und dem Gehäuse verbunden sind,
wobei das Gehäuse oder der Düsenblock geerdet ist,
wobei, wenn der Kollektor von dem Düsenblock aus gesehen wird, der Rand des Isolators einer Außenseite des Feldemissionsgerätes näher gelegen ist als eine Außenseite des Kollektors, und
wenn eine Dicke des Isolators [a] ist und eine Entfernung zwischen der Außenseite des Isolators und der Außenseite des Kollektors [b] ist, sowohl [a ≥ 6mm] als auch [a + b ≥50mm] erfüllt ist.

2. Ein Feldemissionsgerät gemäß Anspruch 1, wobei [a ≥ 8 mm] erfüllt ist.

3. Ein Feldemissionsgerät gemäß Anspruch 1 oder 2, wobei [a + b ≥80 mm] erfüllt ist.

4. Ein Feldemissionsgerät gemäß einem der Ansprüche 1 bis 3, wobei der Isolator aus Polyamid, Polyacetal, Polycarbonat, modifiziertem Polypropylen Ether, Polybutylenterephthalat, Polyethylenterephthalat, Polyallylat, Polysulfon, Polyethersulfon, Polyethylen Sulfid, Polyether-Ether-Keton, Polyimid, Polyethyl Imid, Fluor-Harz, Flüssigkristall-Polymer, Polypropylen, High-Density Polyethylen oder Polyethylen.

5. Ein Feldemissionsgerät gemäß einem der Ansprüche 1 bis 4, das in einem Raum installiert ist, der auf eine Umgebungstemperatur von 20°C und 40°C und eine Luftfeuchtigkeit von 20% bis 50% eingestellt ist.

6. Ein Feldemissionsgerät gemäß einem der Ansprüche 1 bis 5, wobei, wenn der Abstand zwischen Kollektor und dem oberen Ende der Düsen [c] ist, [c ≥ 60 mm] erfüllt ist.

7. Ein Feldemissionsgerät gemäß einem der Ansprüche 1 bis 6, wobei die Düsen des Düsenblocks eine Vielzahl von aufwärtsgerichteten Düsen umfasst, welche die Polymerlösung aus deren Öffnungen in Aufwärtsrichtung abgeben, wobei das Feldemissionsgerät auf solche Weise eingestellt ist, dass die Polymerlösung auf solche Weise aus den Öffnungen der aufwärtsgerichteten Düsen abgegeben wird, dass sie von den Öffnungen der aufwärtsgerichteten Düsen überläuft und somit Nanofasern durch Feldemission bildet und, gleichzeitig, die aus den Öffnungen der aufwärtsgerichteten Düsen übergelaufene Polymerlösung gesammelt und als Material für Nanofasern wiederverwendet wird.

8. Eine Vorrichtung zur Herstellung von Nanofasern, umfassend eine Zuführeinheit, eine Aufwickeleinheit, eine Transfereinheit zum Transferieren einer lange Platte, und ein Feldemissionsgerät welches Nanofasern auf die lange Platte abgibt die durch die Transfereinheit transferiert wird, wobei das Feldemissionsgerät die Feldemissionsgeräte nach den Ansprüchen 1 bis 7 umfasst.

9. Eine Vorrichtung zur Herstellung von Nanofasern gemäß Anspruch 8, wobei das Feldemissionsgerät eine Vielzahl von Feldemissionsgeräten umfasst, die in der Richtung, in der die langen Platte transferiert wird, in Serie angeordnet sind.

## Revendications

1. Dispositif d'émission par effet de champ (20) comprenant un boîtier conducteur (100) ; un collecteur (150) relié au boîtier par un isolateur (152) ; un bloc de buses (110) disposé pour faire face au collecteur, le bloc de buses étant pourvu d'une pluralité de buses (112) évacuant une solution polymère ; et une alimentation électrique (160) appliquant une haute tension entre le bloc de buses et le collecteur, dans lequel une électrode parmi une électrode positive et une électrode négative de l'alimentation électrique est connectée au collecteur tandis qu'une électrode restante parmi l'électrode positive et l'électrode négative de l'alimentation électrique est connectée au bloc de buses et au boîtier,
dans lequel le boîtier ou le bloc de buses est relié à la terre,
dans lequel, lorsque le collecteur est visualisé depuis le bloc de buses, une périphérie de l'isolateur est plus proche d'un extérieur du dispositif d'émission par effet de champ qu'une périphérie du collecteur, et
lorsqu'une épaisseur de l'isolateur est [a] et une distance entre la périphérie de l'isolateur et la périphérie du collecteur est [b], à la fois [a ≥ 6mm] [a + b ≥ 50mm] et sont satisfaites.

2. Dispositif d'émission par effet de champ selon la revendication 1, dans lequel [a ≥ 8 mm] est satisfaite.

3. Dispositif d'émission par effet de champ selon la revendication 1 ou 2, dans lequel [a + b ≥ 80 mm] est satisfaite.

4. Dispositif d'émission par effet de champ selon l'une quelconque des revendications 1 à 3, dans lequel l'isolateur est réalisé en polyamide, polyacétal, polycarbonate, polyphénylène éther modifié, polybutylène téréphtalate, polyéthylène téréphtalate, polyallylate amorphe, polysulfone, polyéthersulfone, polysulfure de phénylène, polyétheréthercétone, polyimide, polyéthylimide, résine de fluor, polymère cristal liquide, polypropylène, polyéthylène haute densité ou polyéthylène.

5. Dispositif d'émission par effet de champ selon l'une quelconque des revendications 1 à 4, qui est installé dans une pièce réglée à une température ambiante allant de 20°C à 40°C et une humidité ambiante allant de 20 % à 60 %.

6. Dispositif d'émission par effet de champ selon l'une quelconque des revendications 1 à 5, dans lequel, lorsque la distance entre le collecteur et des extrémités supérieures des buses est [c] , [c ≥ 60 mm] est satisfaite.

7. Dispositif d'émission par effet de champ selon l'une quelconque des revendications 1 à 6, dans lequel les buses du bloc de buses comprennent une pluralité de buses vers le haut évacuant la solution polymère de sorties de celles-ci vers le haut, le dispositif d'émission par effet de champ étant configuré de sorte que la solution polymère est évacuée des sorties des buses vers le haut de manière à déborder des sorties des buses vers le haut, formant ainsi des nanofibres par émission par effet de champ et de la solution polymère qui a débordé des sorties des buses vers le haut est simultanément recueillie et réutilisée comme matière pour des nanofibres.

8. Dispositif de fabrication de nanofibres comprenant un module d'alimentation, un module d'enroulement, un dispositif de transfert transférant une feuille longue et un dispositif d'émission par effet de champ déposant des nanofibres sur la feuille longue qui est en train d'être transférée par le dispositif de transfert, dans lequel le dispositif d'émission par effet de champ comprend le dispositif d'émission par effet de champ selon l'une quelconque des revendications 1 à 7.

9. Dispositif de fabrication de nanofibres selon la revendication 8, dans lequel le dispositif d'émission par effet de champ comprend une pluralité de dispositifs d'émission par effet de champ agencés en série dans une direction dans laquelle la feuille longue est transférée.
